# EUROPEAN PATENT SPECIFICATION

(11) **EP 1 526 050 B1**
(45) Date of publication and mention of the grant of the patent: **24.01.2007**
(21) Application number: 04024972.4
(22) Date of filing: 20.10.2004
(51) Int. Cl.: B60T 7/04, B60T 8/40

(54) **A pedal feel emulator mechanism for brake by wire pedal**
Bremskraftemulator für ein "brake by wire" Bremspedal
Emulateur de pédale de frein pour un système de freinage "brake by wire"

(30) Priority: 20.10.2003 US 512844 P
(43) Date of publication of application: 27.04.2005
(73) Proprietor: Dura Global Technologies, Inc., Rochester Hills, Michigan 48309 (US)
(72) Inventor: Constantakis, Crista M., Allen Park, MI 48101 (US); Sundaresan, Srini, Troy MI 48083 (US); Kiczek, Casmir R., Gray GA 31032 (US)
(74) Representative: Schaumburg, Thoenes, Thurn, Landskron

(56) References cited:
- DE-A1- 4 324 041
- US-A- 5 544 948
- US-A- 6 058 705
- US-B1- 6 360 631

## Description

### Background of the Invention

This invention concerns devices for replicating the pedal "feel" of a conventional hydraulic brake in an electronically operated brake systems, often referred to as "brake by wire" systems. Such brake by wire systems have been proposed in which displacement and force sensors are associated with the pedal which generate signals used to control the operation of the wheel brakes. In operating a brake by wire system, a driver typically feels more comfortable when the pedal feel is similar to the pedal feel of a conventional brake system, and thus designers have sought to achieve this.

In addition, it is desirable that the sensed foot pressure corresponds to a similar braking effect in both conventional and brake by wire brake systems.

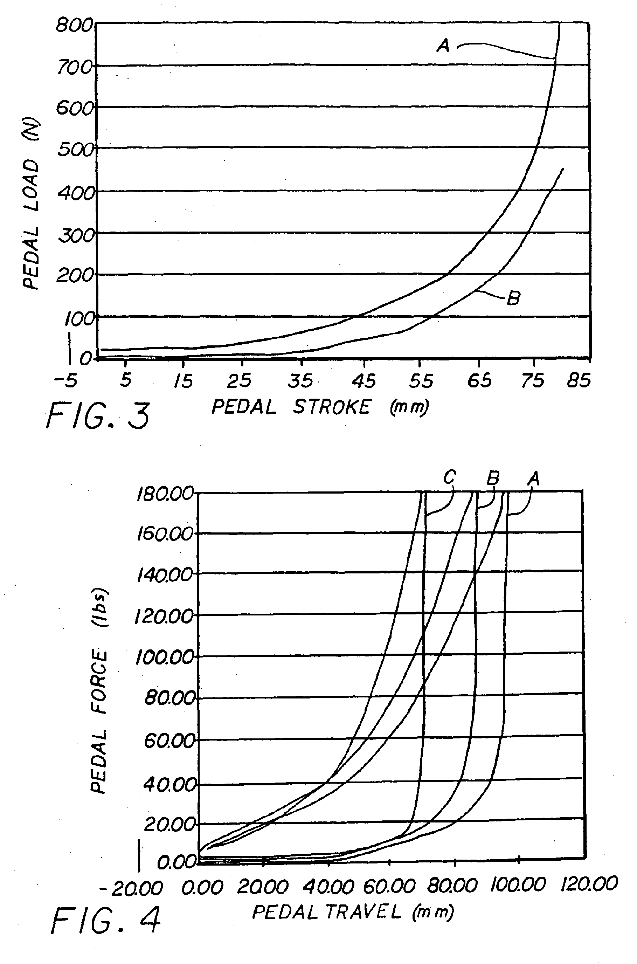

A major characteristic of conventional hydraulic brake systems pedal feel is the particular hysteresis effect exhibited by those systems, in that the pedal effort required to apply the brake greatly exceeds the reaction force sensed when the pedal is released. A second characteristic is a very slow rate of increase in pedal force in the beginning stage of pedal travel, followed by an exponential increase in sensed pedal force as the brake pedal approaches its fully applied position. Thus, any pedal feel emulator device must provide both a hysteresis effect and an initial linear gradual increase in pedal force with a subsequent exponential increase in pedal resistance as the pedal moves through its final range of movement. (See diagram in Figure 3 showing an Apply curve A, and a release curve B).

Document US-A-5,544,948 discloses in combination the following features of claim 1: an emulator mechanism in combination with an automotive brake pedal in a brake by wire system, comprising a chamber having a plunger slidable therein drivingly connected to said brake pedal to be moved thereby in an advancing direction in said chamber by stroking of said pedal and a foamed elastomeric piece disposed in said chamber. The corresponding method features of claim 6 are also known from this document.

Hysteresis has been produced in the context of an electronic control for an accelerator pedal, as described in U.S. patent 6,360,631 B1, by a hysteresis device which induces increasing frictional resistance to pedal movement. The hysteresis device is secured to the support structure and includes a plunger engaging the pedal arm and is movable within a chamber between an extended position and a depressed position upon rotation of the pedal arm. A pair of coaxial compression springs resiliently bias the plunger to the extended position. The chamber forms a first friction surface and the plunger has a plurality of prongs forming a second friction surface engagable with the first friction surface to resist pivotal movement of the pedal arm. Friction between the first and second friction surfaces, that is resistance to movement of the plunger, increases as the plunger moves from the extended position toward the depressed position. Variable friction is obtained because the prongs form angled surfaces engaging the spring for wedging the prongs in a radially outward direction to engage the first and second friction surfaces together with increasing force as the springs are compressed. This frictional resistance creates hysteresis in that the friction that must be overcome to move the pedal is substantially more than the force required to merely hold the pedal in a depressed position, simulating the feel of a mechanical accelerator pedal.

To simulate the proper pedal feel for a brake by wire system presents substantially different requirements from an electronic throttle control due to these described different pedal feel characteristics of a hydraulic brake system.

That is, in the case of brake pedal sensed forces in a hydraulic brake system, there is a slow, linear increase in pedal reaction force as the brake pedal is first applied. In the approximate midrange of pedal travel, resistance begins to increase exponentially which exponential increase continues until the fully applied condition of the brakes is reached.

After release, the pedal reaction force initially declines very sharply, and thereafter declines linearly at a low rate.

Thus, there is a complex relationship between the pedal motion and sensed pedal reaction force and there also is a hysteresis effect in that the apply force is less than the return force due to the loss of energy in a hydraulic system.

It is the object of the present invention to provide a simple mechanism for enabling the pedal feel in a hydraulic brake system for use in a brake by wire brake system.

### Summary of the Invention

The above object as well as other objects which will become apparent upon a reading of the following specification and claims is achieved by a simple, reliable emulator mechanism which causes the brake pedal motion to compress a resiliently compressible foamed plastic elastomeric piece in such a way as to achieve the complex relationship between pedal motion and sensed resistance and also to provide the necessary hysteresis effect which is produced by the pedal for operating a conventional hydraulic brake system. The foamed plastic elastomeric piece provides an increased rate of increase in reaction force after the voids therein are substantially collapsed, and also can be easily formulated to provide hysteresis.

In a modified version, a mechanical spring-hysteresis device as described in U.S. patent 6,360,631 B1 is combined with the foamed plastic elastomeric piece, both compressed by the brake pedal.

In another approach, a foamed plastic elastomeric piece having sufficient inherent hysteresis is combined with a mechanical spring to eliminate the need for a separate hysteresis device while being more easily matched to a force-travel function of a conventional hydraulic brake system pedal.

The spring may also be a gas spring or solid elastomeric piece which may be compressed in series with the foamed elastomeric piece or in a staged successive manner by the design of a brake pedal actuated plunger.

In another approach, a hydraulic resistance device may be operated with the plunger compressing a foamed plastic elastomeric piece.

### Description of the Drawings

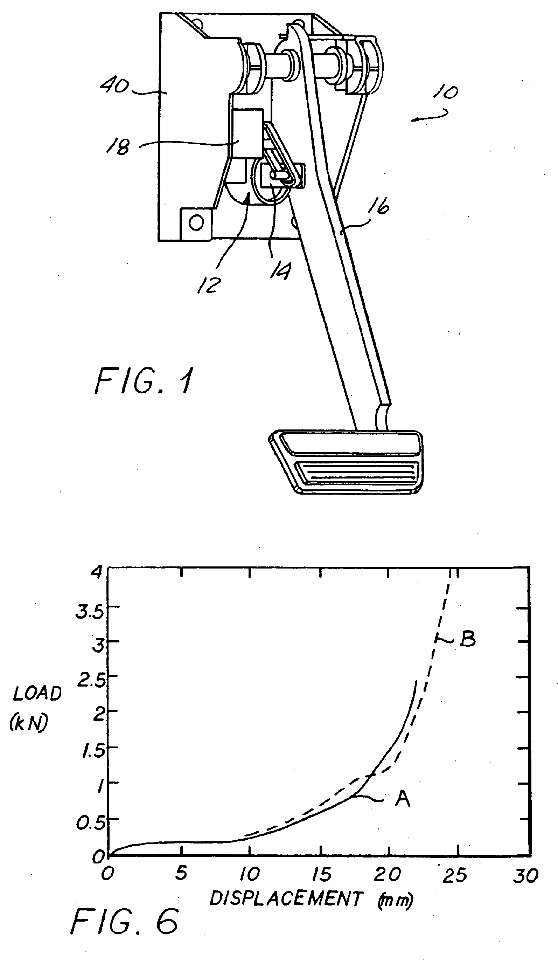

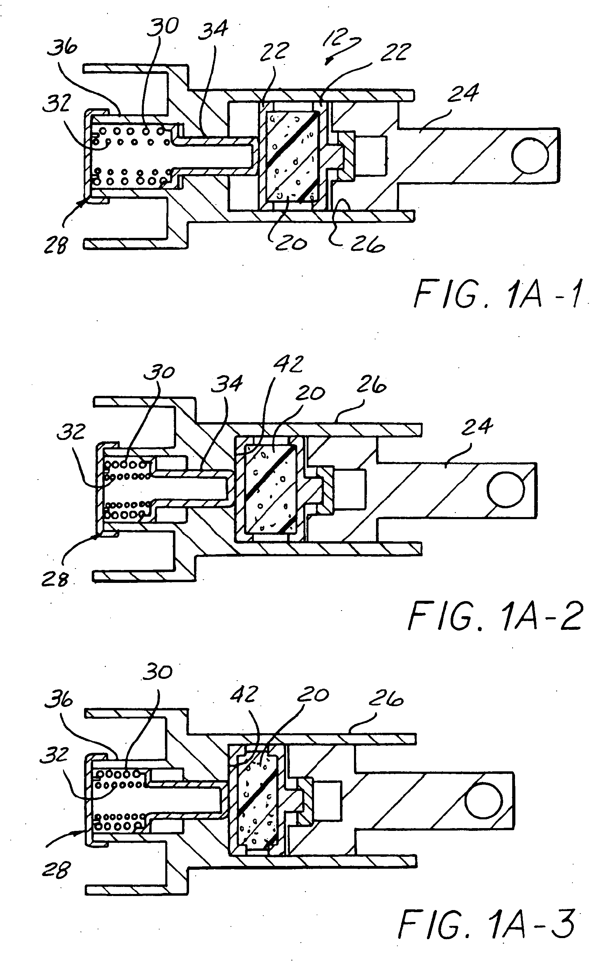

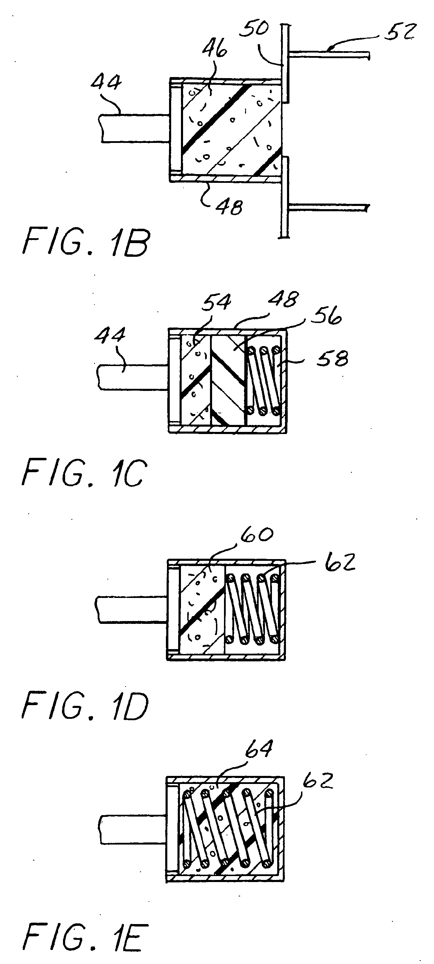

Figure 1 is a pictorial view of a brake pedal assembly including a pedal feel emulator mechanism according to the present invention.
Figures 1A-1, 1A-2 and 1A-3 are sectional views of a first embodiment of a pedal feel emulator mechanism according to the present intention in success stages of brake pedal application.
Figure 1B is a sectional view of a second embodiment of a pedal feel emulator mechanism according to the invention.
Figure 1C is a sectional view of a third embodiment of a pedal feel emulator mechanism according to the invention.
Figure 1D is a sectional view of a fourth embodiment of a pedal feel emulator mechanism according to the invention.
Figure 1E is a sectional view of a fifth embodiment of a pedal feel emulator mechanism according to the invention.
Figure 2 is a side view of a special shape of an elastomeric piece used in the emulator mechanism according to the present invention.
Figure 2A is an end view of the elastomeric piece shown in Figure 2.
Figure 2B is an end view of an alternative shape of the elastomeric piece shown in Figure 2.
Figure 2C is an end view of an another alternative shape of the elastomeric piece shown in Figure 2.
Figure 2D is a side view of the another alternative form of the elastomeric piece shown in Figure 2.
Figure 2E is partially sectional view of yet another embodiment of a pedal feel emulator mechanism according to the invention.
Figure 3 is a plot of pedal load versus pedal stroke created by a pedal feel emulator device according to the invention.
Figure 4 is several plots of pedal force versus pedal stroke produced by several variations of pedal feel emulator mechanisms according to the invention.
Figure 5A is a diagram of a brake pedal assembly and another embodiment of a pedal feel emulator device according to the invention.
Figure 5B is a diagram of a brake pedal assembly and is yet another embodiment of a pedal feel emulator device according to the invention.
Figure 5C is a diagram of a brake pedal assembly and is still another embodiment of a pedal feel emulator device according to the invention.
Figure 5D is a diagram of a brake pedal assembly and is yet another embodiment of a pedal feel emulator device according to the invention.
Figure 6 is a plot of a desired pedal load versus displacement and of pedal load versus displacement produced by an emulator device according to the present invention.

### Detailed Description

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms and variations within the scope of the appended claims.

Figure 1 shows a view of a brake pedal assembly 10 which includes a brake pedal feel emulator device 12 for use with an electronic brake by wire system. A plunger clevis 14 is pinned to the brake pedal 16 and operates the brake pedal emulator mechanism 12. The brake pedal 16 also drives a position sensor 18 to generate a signal used by the brake by wire system (not shown) in the well known fashion.

Referring to Figure 1A-1, the emulator mechanism 12 includes a foamed plastic elastomeric piece 20 confined between two plates 22 in a chamber 26 to be compressed by a plunger 44 moved in advance and return directions by the pedal movement. The foamed plastic elastomer piece 20 may be combined in series with a separate hysteresis device comprised of a pair of coaxial springs 20, 32 confined in a chamber 36 and a plunger 34 as described in detail in U.S. Patent 6,360,631B1 and as represented here in Figures 1A-1, 1A-2, 1A-3, to achieve the desired pedal reaction force characteristics over the complete range of pedal travel. The springs 30, 32 of the hysteresis device of the '631 patent are readily compressible to create a slow gradual increase in pedal force at the beginning of pedal travel, to provide part of the desired pedal feel characteristics.

The foamed plastic elastomeric piece 20 may be comprised of a urethane foam material. Elastomers such as urethane foam have by nature a hysteresis property in that, when they are compressed they do not return all the energy that was applied. This is because elastomers consist of an elastic portion which stores energy and returns it, and a viscous portion which captures energy and converts it to heat. In fact, the amount of hysteresis found in an elastomeric urethane can be controlled by the manufacturer because the ratio of the elastic component to the viscous component can be altered by chemical manipulation during compounding. This means that using a urethane elastomer piece 20 with the correct chemical properties placed in series with the hysteresis device 28 can produce the desired characteristics of a very gradual initial increase in reaction force with a subsequent much sharper increase in force.

One such urethane elastomeric material is a micro-cellular urethane. This material has tiny voids which when increasingly compressed to be collapsed causes the material to become more solid and harder to compress. This creates the exponential increase in loading force that is a required feature of the emulator mechanism. This urethane material also exhibits a significant degree of hysteresis.

A micro-cellular urethane elastomeric piece 20 can be tailored to meet the load versus travel relationship of a brake pedal by altering the density of the material and changing the shape of the elastomeric piece 20. This change in material or shape may also have an influence on the compression versus deflection relationship. Figure 6 shows how closely the force-displacement curve A of such material may be made to match a desired force-displacement curve B.

The components may be placed in series in the chamber 26 that is molded inside a plastic mounting bracket as shown in Figure 1.

Figures 1A-1, 1A-2, and 1A-3 each show a cross-section of a pedal feel emulator mechanism 12 in three successive stages from a no load position (Figure 1A-1), to a partially compressed condition (Figure 1A-2) to a full travel position (Figure 1A-3). In the first stage the hysteresis mechanism 28 and the urethane piece 20 are not loaded. In stage two, when substantial force has been applied, the hysteresis springs 30, 32 begin to compress which causes the plunger 24 to apply a force to the inside of the cylinder 36. The further the springs 30, 32 are compressed the larger the plunger force exerted on the inside walls of the cylinder 36. In stages two and three, the plunger 24 has advance to drive the lead plate 22 against the surface 42 and the micro-cellular urethane elastomeric piece 20 alone is further compressed by continued travel of the plunger 24, greatly increasing the rate of increase of the pedal reaction force.

The mounting bracket 40 for the pedal assembly 10 may be a plastic mounting bracket to allow the integration of the pedal feel emulator mechanism 12 into the lower part of the bracket 40. A plastic mounting bracket has additional advantages in that it costs less and it is much lighter than a traditional stamped steel mounting bracket. It could also be constructed of other materials like die-cast zinc, aluminum or magnesium alloys.

As noted, some foamed elastomers have the inherent characteristics of an exponential increase in force after an initial low linear rate of increase and also have an inherent hysteresis as the restoring force is less than the applying force so that a separate hysteresis generating mechanism may be able to be eliminated to simplify the arrangement.

A problem with the design described above is the inability of the micro-cellular urethane to maintain its performance characteristics while operating under extreme temperatures. Polyurethane material exhibits properties of becoming very stiff under cold temperatures and moderately less stiff under hot temperatures.

An expanded foam silicone elastomer material has advantages for this application. The unique chemistry resulting from the silicon-oxygen polymer backbone is responsible for the extended service temperature capability of silicone rubber. This basic difference between silicone polymers and organic polymers is found in the composition of the polymer backbone chain. This silicon-oxygen linkage is identical to the chemical bond found in highly stable materials such as quartz, glass, and sand, and is responsible for outstanding high temperature performance in silicones.

Silicone foam is commercially available from a number of sources.

The use of a medium density expanded silicone foam can eliminate the need for a separate hysteresis mechanism of the pedal feel emulator mechanism to provide the desired pedal feel to the driver. A medium density expanded silicone rubber piece may be located at the top of a mounting bracket and provided with a preload of one pound by the pedal system. Because of this simplification, the mounting bracket may reduced in size and mass, improving packaging and weight considerations. Eliminating the hysteresis mechanism also reduces the part count for this assembly. Overall this design is more robust, smaller, weighs less and costs significantly less than the first described design.

Figures 1B-1E show variations of a mechanical spring-elastomeric piece combination without a separate hysteresis device used to create a simulated pedal feel.

In Figure 1B, a plunger 44 is arranged to directly compress an elastomeric plastic foam piece 46 in a chamber 48. A Belleville spring 50 is compressed in a second chamber 52 through an abutment with the foamed plastic elastomeric piece 46.

In this case, the material of the foamed plastic elastomeric piece 46 provides the necessary hysteresis.

Both the foamed plastic elastomeric piece 46 and spring 50 provide initial deflection with a low force rate of increase. As the foamed elastomeric piece compresses, its compressibility is reduced and the rate of the spring 50 also increases to create the exponential rate of increase at advanced travel positions.

In Figure 1C, a shorter foamed plastic elastomeric piece 54, a solid elastomeric piece 56, and a helical compression spring 58 are assembled in the chamber 48 to create a different force-travel characteristic, with a stiffer force-travel relationship.

In Figure 1D, a single longer foamed elastomeric piece 60 is shown with a stiffer helical compression spring 62 for a softer force-travel characteristic.

In Figure 1E, a longer helical spring 62 is molded into a longer foamed elastomeric piece 64 for providing yet another characteristic.

Expanded foam silicone elastomeric pieces can be easily configured to meet any load versus-deflection requirement. The hysteresis properties, however, can not be controlled as easily. How much the material springs back (i.e., the hysteresis) is a characteristic directly related to the chemical properties of the spring material. However, the fact that there may be less force than desired on the return stroke of a brake pedal may not be and acute problem. In traffic, for example, the driver may place his or her foot on the pedal to slow the vehicle then immediately take his or her foot off the pedal to apply the accelerator. In this case, return stroke feedback is not really felt by the driver anyway.

Changing the height (thickness) of the foamed silicone piece allows ready adaption to a desired particular force-travel curve. (See curves A, B, C in Figure 4 depicting the characteristic curve of three silicone foam pieces of different lengths).

Various other similar elastomer materials which are candidates include open cell foam polyurethane, foamed silicone, foamed fluorocarbon, foamed highly saturated nitrite, foamed methyl acrylate polymer, EDPM foam, Neoprene® foam or Santoprene® foam.

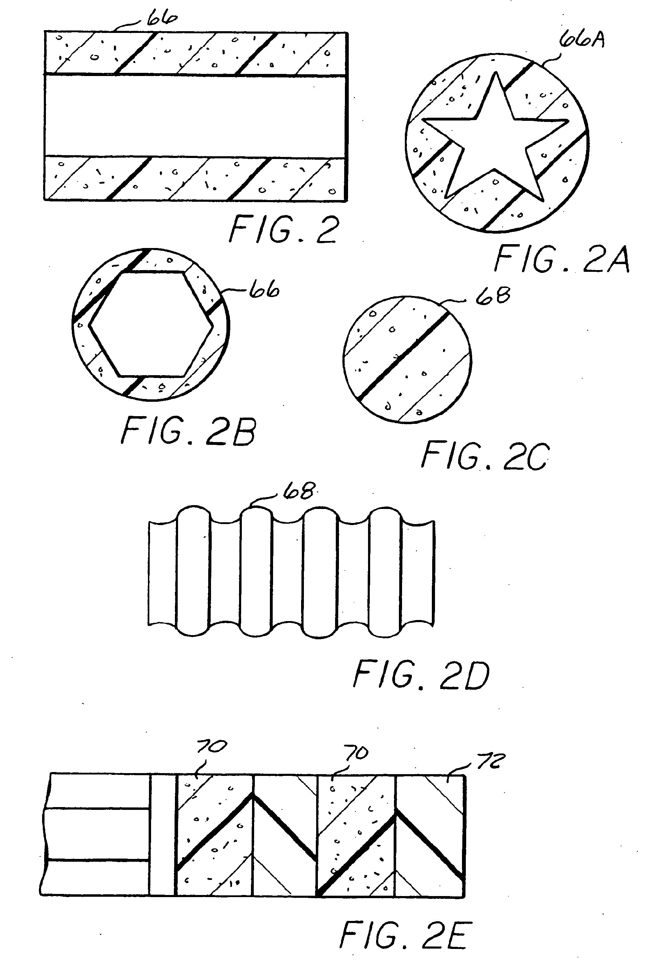

The foamed elastomeric piece can be given various geometric configurations such as to achieve a desired reaction force characteristic, as suggested in U.S. patent 6,419,215 B1 and 6,540,216B2 both patents hereby incorporated herein by reference. In Figure 2, a hollow elastomeric piece 66 is shown.

This could take various shapes, such as the star cavity shape in Figure 2A or hexagonal cavity shown in Figure 2B.

A solid shape piece 68 such as the circular shape shown in Figure 2C could be used, which could vary in diameter along its length as shown in Figure 2D.

The changing shapes produce different force-travel characteristics to enable producing a particular desired force-displacement characteristic. Combinations of two or more foam elastomeric pieces 70 and solid elastomeric pieces 72 can also be used to achieve a particular compressive force characteristics as shown in Figure 2E.

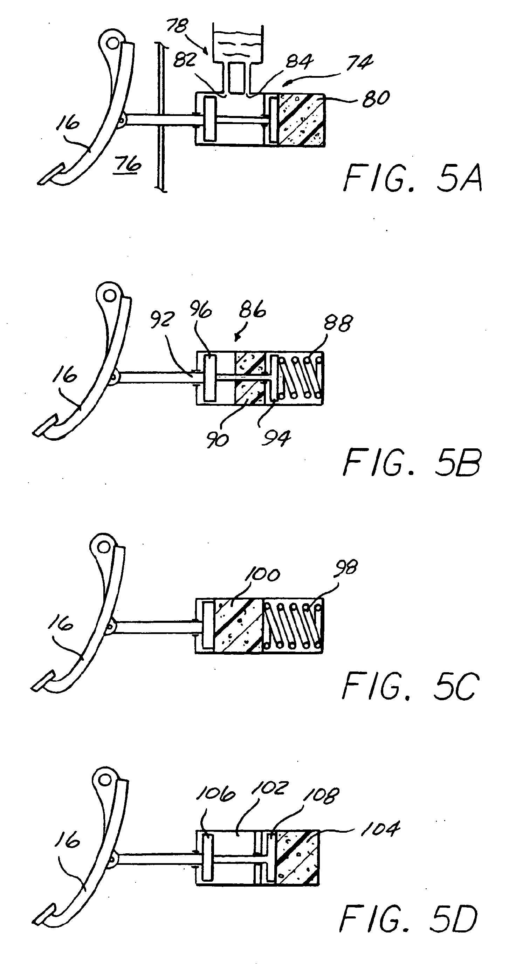

Figure 5A shows another form of emulator 74 located outside the passenger compartment 76 which uses "dummy" hydraulics and a foamed plastic elastomeric piece 80, in which outflow orifices 82, 84 are successively covered to greatly increase pedal resistance as the pedal travel increases, with foamed plastic elastomeric piece 80 also providing resistance.

Figures 5B-5D show other emulator devices which can be located within the passenger compartment.

Figure 5B shows an emulator 86 including two stage compression of a spring 88 and foam elastomeric piece, 90 by a plunger 92 having two pistons 94, 96 which successively and respectively engage the spring 88 and foamed plastic elastomeric piece 90 to stage the compression of the respective elements.

Figure 5C shows an in series combination of a spring 98 and foam piece 100 which are both compressed at the same time.

Figure 5D shows an air spring 102 and elastomeric piece 104 combination.

The spring rates, compressibility, etc., of those elements in each combination can be adjusted empirically to provide any desired force-travel curve required or by conventional analytic methods.

## Claims

1. An emulator mechanism in combination with an automotive brake pedal (16) in a brake by wire brake system in which movement of said brake pedal (16) does not displace hydraulic fluid in brake system components, said emulator mechanism comprising:
a chamber (26) having a plunger (24) slidable therein drivingly connected to said brake pedal (16) to be moved thereby in an advancing direction in said chamber (26) by stroking of said brake pedal (16);
a foamed plastic elastomeric piece (20) disposed in said chamber (26) so as to be compressed by said plunger advancing movement therein, said elastomeric piece (20) requiring an exponential rate of increase of pedal force required to be exerted on said brake pedal (16) as said brake pedal (16) approaches an end of its stroke, said elastomeric piece (20) exhibiting substantial hysteresis when compressed so that forces exerted on said pedal (16) by said compressed elastomeric piece (20) are substantially reduced when stroking of said brake pedal (16) ceases.

2. The emulator mechanism according to claim 1 wherein said foamed plastic elastomeric piece (20) is constructed from micro cellular urethane.

3. The emulator mechanism according to claim 1 wherein said foamed plastic elastomeric piece (20) is constructed of an expanded foam silicone elastomeric material.

4. The emulator mechanism according to claim 1 further including a mechanical spring also compressed by movement of said plunger (24) in said advancing direction.

5. The emulator mechanism according to claim 1 wherein a separate hysteresis device is also included operated by movement of said plunger (24).

6. A method of emulating a conventional brake pedal feel of a brake pedal (16) used to operate a brake by wire brake system in which said brake pedal (16) does not directly operate any hydraulically operated braking components as to generate hysteresis, comprising:
engaging a plunger (24) with said brake pedal (16) to be moved in an advancing direction therewith upon stroking of said brake pedal (16);
compressing a resiliently compressible member comprised of a piece of foamed plastic elastomeric (20) with said plunger advancing movement, said foamed plastic elastomeric piece (20) having significant hysteresis so that the force exerted on said pedal (16) by said compressed elastomeric piece (20) is substantially reduced upon ceasing stroking of said brake pedal (16) and requires an exponential rate of increase of force necessary to further compress said elastomeric piece (20) with continued advancing movement of said plunger (24) due to collapse of voids in said elastomeric piece (20).

7. The method according to claim 6 wherein said foamed plastic elastomeric piece (20) is shaped to achieve said progressively increasing force necessary to further compress said elastomeric piece (20) after.

8. The method according to claim 7 including compressing another resiliently compressible member by said plunger (24) advancing movement.

9. The method according to claim 8 wherein both of said foamed plastic elastomeric piece and said another resiliently compressible member are simultaneously compressed by said plunger advancing movement.

10. The method according to claim 8 wherein said foamed plastic elastomeric piece (20) and said another resiliently compressible member are compressed in stages by said plunger advancing movement.

11. The method according to claim 7 wherein a separate hysteresis device (28) is also operated by said plunger advancing movement.

## Patentansprüche

1. Emulatormechanismus in Kombination mit einem Kraftfahrzeugbremspedal (16) in einem Brake-by-Wire-Bremssystem, bei dem in den Bremssystemkomponenten durch die Bewegung des Bremspedals (16) kein Hydraulikfluid verschoben wird, wobei der Emulatormechanismus umfasst:
eine Kammer (26) mit einem gleitbeweglich darin angeordneten Kolben (24), der mit dem Bremspedal (16) antriebsmäßig verbunden ist und von diesem in der Kammer (26) durch die Hubvergrößerung des Bremspedals (16) nach vorn bewegt wird;
ein geschäumtes Kunststoff-Elastomerteil (20), das in der Kammer (26) angeordnet ist, damit es in derselben durch die Vorwärtsbewegung des Kolbens zusammengedrückt wird, wobei für das Elastomerteil (20) eine exponentielle Erhöhung der Pedalkraft erforderlich ist, die auf das Bremspedal (16) ausgeübt werden muss, wenn sich das Bremspedal (16) einem Ende seines Hubs nähert, wobei das Elastomerteil (20) eine beträchtliche Hysterese aufweist, wenn es so zusammengedrückt wird, dass die von dem zusammengedrückten Elastomerteil (20) auf das Pedal (16) ausgeübten Kräfte wesentlich verringert werden, wenn die Hubvergrößerung des Bremspedals (16) aufhört.

2. Emulatormechanismus nach Anspruch 1, wobei das geschäumte Kunststoff-Elastomerteil (20) aus mikroporösem Urethan gebildet ist.

3. Emulatormechanismus nach Anspruch 1, wobei das geschäumte Kunststoff-Elastomerteil (20) aus einem Schaum-Silikon-Elastomermaterial gebildet ist.

4. Emulatormechanismus nach Anspruch 1, ferner umfassend eine mechanische Feder, die auch durch die Vorwärtsbewegung des Kolbens (24) zusammengedrückt wird.

5. Emulatormechanismus nach Anspruch 1, wobei auch eine separate Hysteresevorrichtung enthalten ist, die durch die Bewegung des Kolbens (24) betätigt wird.

6. Verfahren zur Emulation eines herkömmlichen Bremspedalgefühls bei einem Bremspedal (16), das zur Betätigung eines Brake-by-Wire-Bremssystems verwendet wird, wobei das Bremspedal (16) keine hydraulisch betätigten Bremskomponenten direkt betätigt, um Hysterese zu erzeugen, umfassend:
Ineingriffbringen eines Kolbens (24) mit dem Bremspedal (16), sodass er nach der Hubvergrößerung des Bremspedals (16) mit demselben nach vorn bewegt wird;
Zusammendrücken eines elastisch zusammendrückbaren Elements, das aus einem Stück geschäumten Kunststoff-Elastomers (20) besteht, durch die Vorwärtsbewegung des Kolbens, wobei das geschäumte Kunststoff-Elastomerteil (20) eine beträchtliche Hysterese aufweist, sodass die durch das zusammengedrückte Elastomerteil (20) auf das Pedal (16) ausgeübte Kraft wesentlich verringert wird, wenn die Hubvergrößerung des Bremspedals (16) aufhört, und eine exponentielle Erhöhung der Kraft erforderlich ist, die benötigt wird, um das Elastomerteil (20) mit kontinuierlicher Vorwärtsbewegung des Kolbens (24) weiter zusammenzudrücken, weil die Hohlräume im Elastomerteil (20) zusammenfallen.

7. Verfahren nach Anspruch 6, wobei das geschäumte Kunststoff-Elastomerteil (20) so geformt ist, dass die progressiv zunehmende Kraft erreicht wird, die benötigt wird, um das Elastomerteil (20) danach weiter zusammenzudrücken.

8. Verfahren nach Anspruch 7 einschließlich des Zusammendrückens eines anderen elastisch zusammendrückbaren Elements durch die Vorwärtsbewegung des Kolbens (24).

9. Verfahren nach Anspruch 8, wobei sowohl das geschäumte Kunststoff-Elastomerteil als auch das andere elastisch zusammendrückbare Element durch die Vorwärtsbewegung des Kolbens gleichzeitig zusammengedrückt werden.

10. Verfahren nach Anspruch 8, wobei das geschäumte Kunststoff-Elastomerteil (20) und das andere elastisch zusammendrückbare Element durch die Vorwärtsbewegung des Kolbens schrittweise zusammengedrückt werden.

11. Verfahren nach Anspruch 7, wobei eine separate Hysteresevorrichtung (28) auch durch die Vorwärtsbewegung des Kolbens betätigt wird.

## Revendications

1. Mécanisme émulateur en combinaison avec une pédale (16) de frein de véhicule automobile dans un système de freinage à freins par câbles, dans lequel un déplacement de ladite pédale (16) de frein ne déplace aucun fluide hydraulique dans des composants du système de freinage, ledit mécanisme émulateur comprenant:
une chambre (26) dans laquelle un plongeur (24) peut coulisser et est connecté à ladite pédale (16) de frein en étant mené par elle, de manière à être ainsi déplacé dans une direction d'avance dans ladite chambre (26) par une course de ladite pédale (16) de frein;
une pièce (20) en élastomère plastique moussé, disposée dans ladite chambre (26) de façon à y être comprimée par ledit déplacement d'avance du plongeur, ladite pièce (20) en élastomère requérant un taux exponentiel d'accroissement de la force à exercer sur ladite pédale (16) de frein au fur et à mesure que ladite pédale (16) de frein s'approche d'une fin de sa course, ladite pièce (20) en élastomère présentant une hystérésis substantielle lorsqu'elle est comprimée, de sorte que les forces exercées sur ladite pédale (16) par ladite pièce (20) comprimée en élastomère sont substantiellement réduites lors d'une cessation de la course de ladite pédale (16) de frein.

2. Mécanisme émulateur selon la revendication 1, dans lequel ladite pièce (20) en élastomère plastique moussé est construite en uréthane micro cellulaire.

3. Mécanisme émulateur selon la revendication 1, dans lequel ladite pièce (20) en élastomère plastique moussé est construite en matière élastomère de silicone en mousse expansée.

4. Mécanisme émulateur selon la revendication 1, qui inclut en outre un ressort mécanique qui est lui aussi comprimé par le déplacement dudit plongeur (24) dans ladite direction d'avance.

5. Mécanisme émulateur selon la revendication 1, qui inclut en outre un dispositif d'hystérésis séparé, actionné par le déplacement dudit plongeur (24).

6. Procédé d'émulation du touché classique de pédale de frein produit par une pédale (16) de frein utilisée pour actionner un système de freinage à freins par câbles, dans lequel ladite pédale (16) de frein n'actionne directement aucun composant de freinage actionné hydrauliquement de façon à générer une hystérésis, comprenant les étapes consistant à :
engager un plongeur (24) avec ladite pédale (16) de frein pour qu'il soit déplacé avec elle dans une direction d'avance lors d'une course de ladite pédale (16) de frein;
comprimer, par un déplacement d'avance du plongeur, un élément élastiquement compressible comprenant une pièce (20) en élastomère plastique moussé, ladite pièce (20) en élastomère plastique moussé présentant une hystérésis substantielle, de sorte que la force exercée sur ladite pédale (16) par ladite pièce (20) comprimée en élastomère est substantiellement réduite lors d'une cessation de la course de ladite pédale (16) de frein, et qu'il faut, pour comprimer davantage ladite pièce (20) en élastomère, un taux exponentiel d'accroissement de la force nécessaire lors d'une continuation du déplacement d'avance dudit plongeur (24), en raison d'un affaissement de pores dans ladite pièce (20) en élastomère.

7. Procédé selon la revendication 6, dans lequel ladite pièce (20) en élastomère plastique moussé est configurée de manière à exercer ladite force progressivement croissante nécessaire pour comprimer davantage ultérieurement ladite pièce (20) en élastomère.

8. Procédé selon la revendication 7, qui inclut une compression d'un autre élément élastiquement compressible par ledit déplacement d'avance du plongeur (24).

9. Procédé selon la revendication 8, dans lequel ladite pièce en élastomère plastique moussé et ledit autre élément élastiquement compressible sont tous deux comprimés simultanément par ledit déplacement d'avance du plongeur.

10. Procédé selon la revendication 8, dans lequel ladite pièce (20) en élastomère plastique moussé et ledit autre élément élastiquement compressible sont comprimés par paliers par ledit déplacement d'avance du plongeur.

11. Procédé selon la revendication 7, dans lequel un dispositif d'hystérésis séparé (28) est lui aussi actionné par ledit déplacement d'avance du plongeur.
